# FASCICULE DE BREVET EUROPEEN

(11) **EP 0 518 795 B1**
(45) Date de publication et mention de la délivrance du brevet: **24.04.1996**
(21) Numéro de dépôt: 92440075.7
(22) Date de dépôt: 11.06.1992
(51) Int. Cl.: B65D 88/12, B60P 3/08

(54) **Conteneur universel multiusage à capacité maximale**
Mehrzweckbehälter maximalen Rauminhalts
Universal multipurpose container of maximal capacity

(30) Priorité: 11.06.1991 FR 9107280
(43) Date de publication de la demande: 16.12.1992
(73) Titulaire: LOHR INDUSTRIE, F-67980 Hangenbieten (FR)
(72) Inventeur: Scheer, Daniel, F-67190 Mutzig (FR); Ros, Eric, F-67200 Strasbourg (FR)
(74) Mandataire: Metz, Paul

(56) Documents cités:
- EP-A- 0 001 364
- WO-A-80/01553
- US-A- 4 221 420
- US-A- 4 637 763
- US-A- 4 801 229

## Description

La présente invention se rapporte à un conteneur universel multiusage à capacité maximale.

Le transporteur utilisateur de conteneurs n'a code souci principal que celui de l'exploitation maximale du volume de chargement.

Cette considération directement liée à la rentabilité lui fera préférer le conteneur de faible poids, de faible épaisseur et de volume intérieur intégralement exploitable.

Or, dans le cas des conteneurs de formes techniques habituelles, la recherche de l'adaptation au produit transporté a laissé au second plan les caractéristiques directement liées à l'augmentation de la quantité transportée.

On constate qu'il existe dans chaque conteneur des emplacements non exploités en chargement.

Il s'agit de volumes d'extrémité vides car difficilement accessibles, notamment par des charges encombrantes non fractionnables.

On connaît par la publication WO 80/01553 au nom de BILSPEDITION AB un dispositif de transport à monter sur le châssis d'un camion ou d'une remorque pour le transport de marchandises. Ce dispositif comprend une structure à toit relevable et un plan intermédiaire de chargement mobile par translation verticale par des moyens d'élevation.

Une plate-forme rectangulaire comporte des montants colonnes qui renferment des vis d'entrainement actionnées par un moteur unique pour le déplacement en translation verticale du plan intermédiaire de chargement qui est maintenu en permanence parallèle au plancher.

La structure de toit est déplaçable verticalement par l'intermédiaire de quatre poteaux identiques mobiles verticalement. Ces poteaux transmettent au toit la poussée provenant du déplacement vertical du plan intermédiaire de chargement et permettent donc aussi sa descente.

Ainsi, la structure de toit se soulève automatiquement avec le plan intermédiaire de chargement à partir d'une certaine hauteur de celui-ci.

Cette invention antérieure ne permet pas d'atteindre les principaux objectifs fixés dans la présente demande.

En effet, le plan intermédiaire de chargement ne peut s'incliner, ce qui est nécessaire par exemple pour le chargement d'un ou de plusieurs véhicules.

Les mouvements de la structure de toit relevable sont condamnés à rester dépendants de ceux du plan intermédiaire de chargement.

Par ailleurs, il existe une distance constante entre le plan intermédiaire de chargement et la structure de toit lorsqu'ils sont en prise, ce qui ne permet pas au plan intermédiaire, ni de s'approcher de la structure de toit, ni de descendre lorsque le toit est relevé sans abaisser le toit .

La présente invention a pour but d'exploiter au mieux tout l'espace utile intérieur par un plan intermédiaire de chargement inclinable et les deux parties du volume utile intérieur divisées par le plan intermédiaire de chargement en rendant totalement indépendants les mouvements des deux structures.

Le deuxième but concerne la multiplicité et la diversité des charges transportées dans les meilleures conditions de sécurité et de rentabilité de transport.

Un autre but se rapporte à la facilité d'utilisation, de mise en oeuvre et de rapidité du chargement.

A cet effet, la présente invention concerne un conteneur universel multiusage à capacité maximale, caractérisé en ce qu'il est formé d'un cadre-châssis à deux longerons porteurs supportant aux angles et à encastrement des montants d'ossature, reliés à un toit relevable par un ensemble double de levage, ledit conteneur présentant un volume intérieur dégagé dans lequel se déplace au moins un plateau porteur mobile verticalement, entraîné par un ensemble d'élévation intégré dans les montants d'angle.

Les nombreux avantages supplémentaires sont indiqués ci-après :
. le toit relevable permet d'admettre des charges plus hautes en utilisant totalement le volume resté disponible sous le toit ;
. la présence d'au moins un plateau intermédiaire mobile de chargement universel et autonome permet d'optimiser le volume disponible et de faciliter le chargement ;
. la conformation générale et les moyens de fixation, de préhension et de soutien prévus permettent d'utiliser indifféremment ce conteneur en transport routier, ferroviaire, maritime et aérien sans adaptation particulière ;
. il permet aussi bien le chargement frontal que latéral.

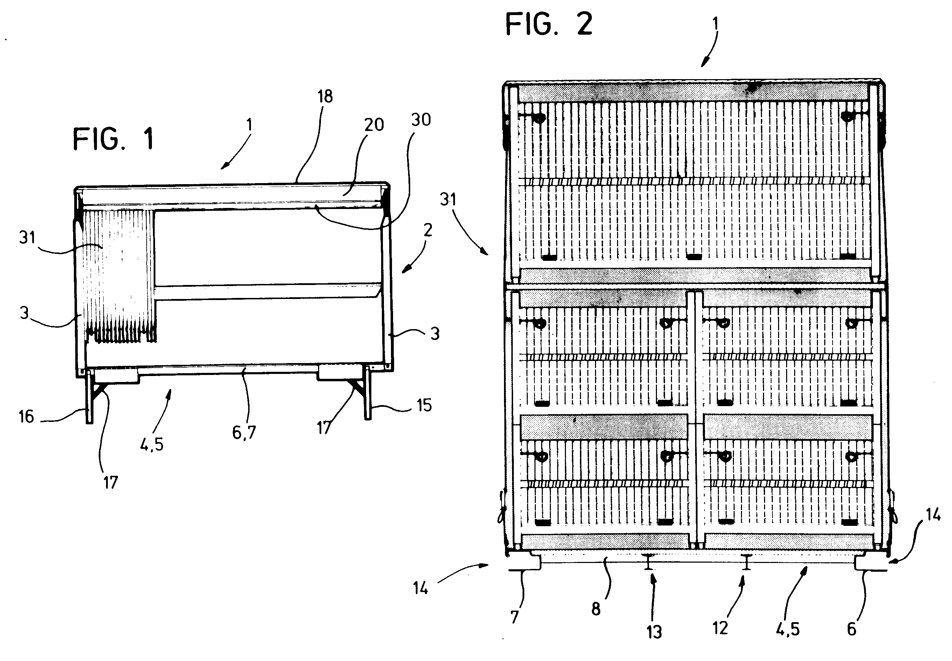

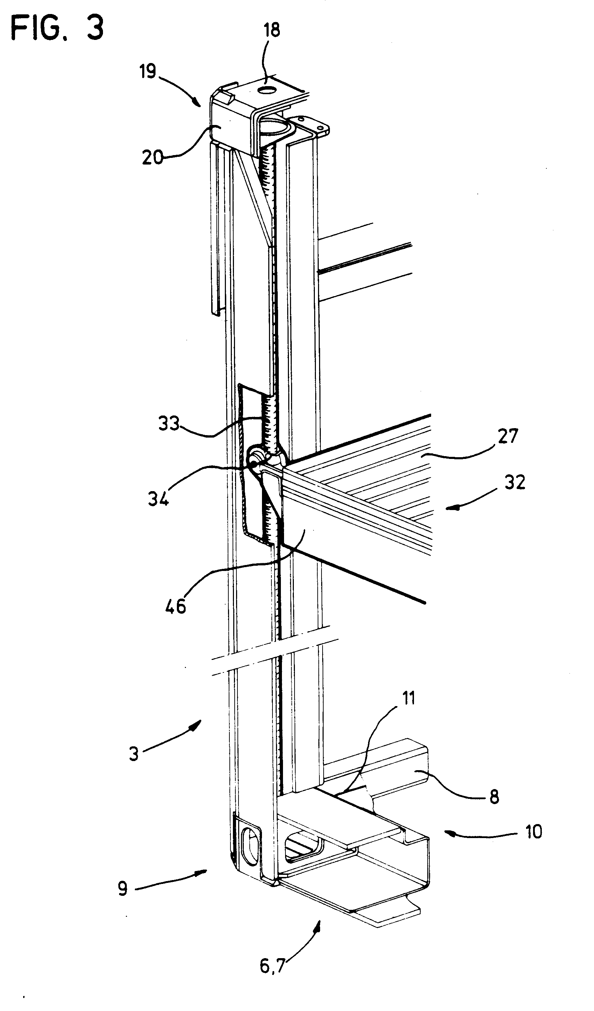

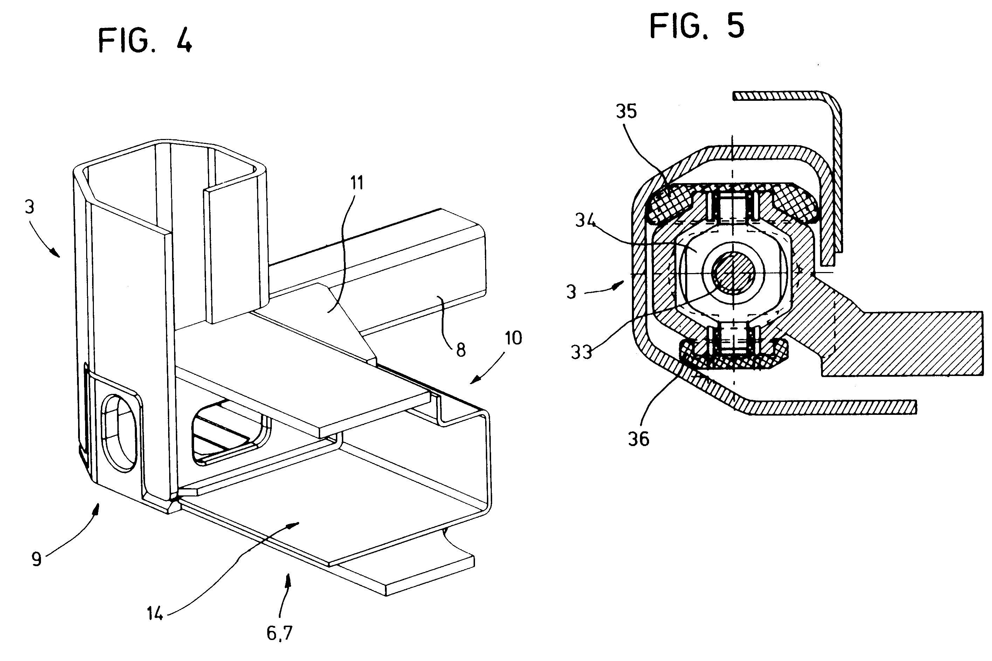

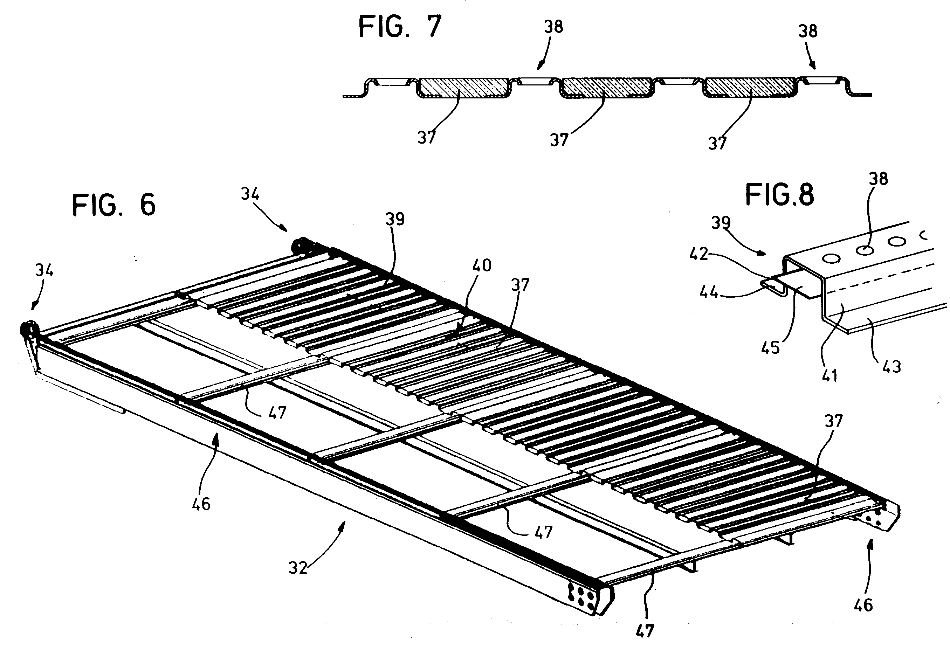

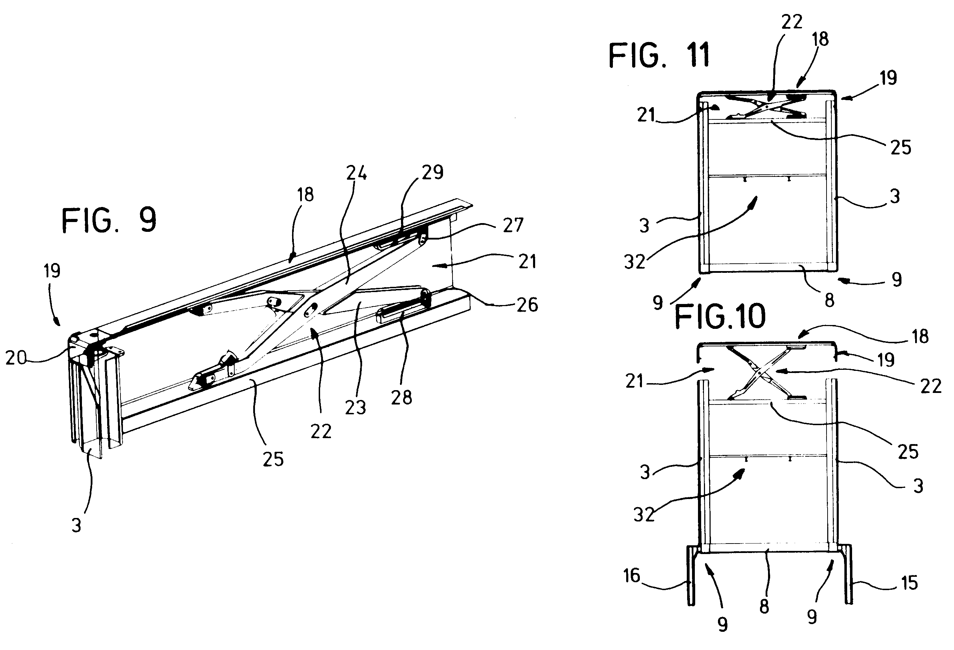

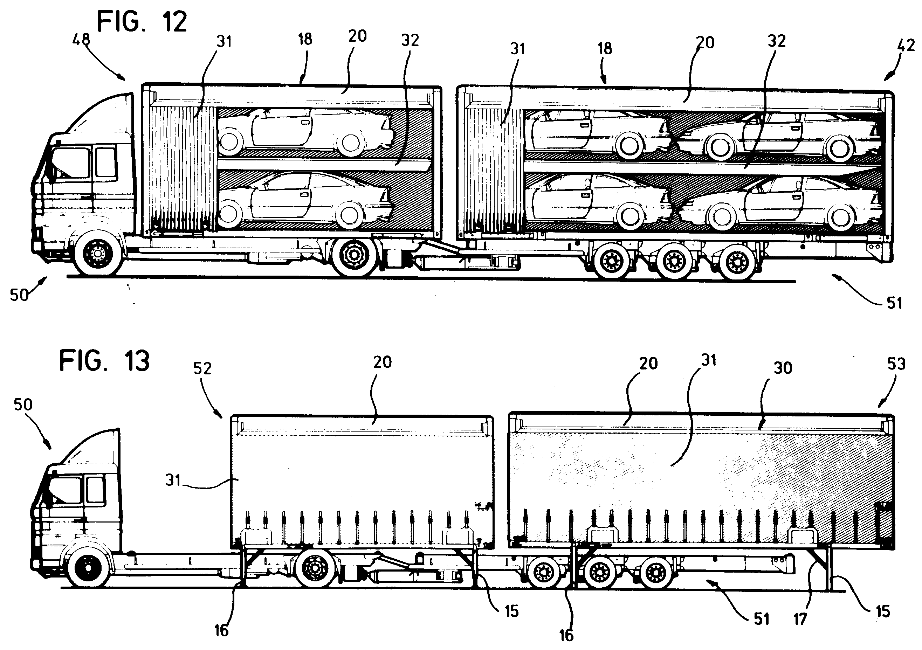

Les caractéristiques techniques et d'autres avantages de l'invention sont consignés dans la description qui suit, effectuée à titre d'exemple non limitatif sur un mode d'exécution en référence aux dessins accompagnants dans lesquels :
. la figure 1 est une vue générale de profil, conteneur sur béquilles ;
. la figure 2 est une vue en coupe transversale médiane d'un conteneur chargé de caisses grillagées ;
. la figure 3 est une vue schématique d'un montant d'angle montrant la vis et l'écrou porteur de l'ensemble d'élévation du plateau intermédiaire ;
. la figure 4 est une vue en perspective d'un angle inférieur montrant l'encastrement de l'extrémité inférieure d'un montant d'angle dans un angle du cadre-châssis ;
. la figure 5 est une vue en coupe transversale sur montant d'angle au niveau d'un écrou porteur de l'ensemble d'élévation du plateau intermédiaire ;
. la figure 6 est une vue en perspective d'ensemble du plateau porteur intermédiaire ;
. la figure 7 est une vue générale en coupe transversale sur section courante du plateau porteur intermédiaire et du plancher ;
. la figure 8 est une vue schématique en perspective d'un profilé métallique de soutien du plateau porteur intermédiaire et du plancher ;
. la figure 9 est une vue en perspective simplifiée de côté de l'ensemble de levage du toit ;
. les figures 10 et 11 sont des vues schématiques en coupe transversale du conteneur selon l'invention, respectivement toit relevé avec béquilles et abaissé sans béquilles ;
. la figure 12 est une vue de profil d'un convoi articulé porte-voitures ;
. la figure 13 est une vue de profil d'un autre convoi articulé en phase de carrosserie déposée, conteneurs reposant sur leurs béquilles.

Le conteneur 1 universel et multiusage selon l'invention présente la conformation et les caractéristiques générales suivantes.

Une ossature 2 formée de montants d'angle tels que 3 se développe au-dessus d'une et repose sur une structure inférieure porteuse 4 sous la forme d'un cadre-châssis 5 se composant d'un périmètre formé de deux longerons porteurs 6 et 7 de profil ouvert, par exemple en C, et de plusieurs traverses de liaison dont au moins deux traverses d'extrémité telles que 8, solidarisées en extrémité aux longerons porteurs. Les jonctions de coin de ce cadre et l'extrémité inférieure des montants d'angle 3 sont assemblées à encastrement en une structure composite interpénétrante immobilisant et portant la base des montants d'angle. Cette structure interpénétrante constitue une pièce de coin 9 présentant au moins une ouverture oblongue sur sa face Inférieure en vue de sa fixation sur un châssis.

Cette structure composite interpénétrante de coin 9 a pour but de transmettre tous les efforts aux longerons porteurs du cadre-châssis 5.

Les longerons présentent à l'extrémité supérieure de leur face arrière une feuillure longitudinale 10 dans laquelle viennent se loger et prendre appui les bords longitudinaux d'un plancher 11 de faible épaisseur, par exemple celui décrit ci-après.

Deux rails longitudinaux 12 et 13 s'étendent en sous face le long de la partie médiane du plancher 11. Ces rails de profil en I servent de guidage pour le chargement sur les châssis porteurs adaptés des camions.

Le corps profilé en C des longerons porteurs 6 et 7 délimite un logement longitudinal 14 utilisé ouvert ou fermé en tant que coffre de rangement, ou emplacement pour des béquilles rabattables de soutien telles que 15 et 16, que le conteneur 1 comporte au niveau de chacun de ses coins 9, ainsi que comme logement pour divers accessoires et groupes d'énergie.

Le logement longitudinal 14 délimité par chaque longeron est utilisé comme zone de dégagement permettant la préhension par pinces ou élingues pour la manipulation du conteneur.

Les béquilles de soutien 15 et 16 sont maintenues chacune en position verticale par un bras oblique 17.

Les quatre montants d'angle tels que 3 portés par le cadre-châssis 5 soutiennent un toit relevable 18, mobile entre une position haute relevée dégageant le haut du conteneur et une position basse abaissée obturant la partie supérieure de celui-ci.

Le toit 18 formé par exemple d'un élément de couverture plat, à rebords périmétriques incurvés vers le bas tels que 19 formant rives de toit 20, est soulevé par un ensemble double de levage 21 agissant à chacune de ses extrémités, constitué par deux unités articulées de poussée-soutien, par exemple du type à ciseaux 22, selon lequel chacune des extrémités du toit est supportée par deux bras sécants 23 et 24 à extrémités articulées sur une traverse supérieure telle que 25 entre les montants d'angle d'une même petite face transversale et la zone en regard du sous-toit. Chaque bras sécant présente au moins une extrémité articulée 26, 27 déplaçable le long d'une coulisse 28, 29, une des coulisses étant prévue sur la traverse supérieure et l'autre sur le sous-toit.

Les rives 20 du toit relevable 18 comportent par exemple une glissière de support et/ou de déplacement 30 d'une bâche ou d'un rideau 31. Cette glissière s'efface vers le haut avec le toit, dégageant ainsi une pleine ouverture latérale lorsque le toit est relevé.

Dans son volume intérieur, le conteneur présente au moins un plateau porteur intermédiaire 32 soutenu par un ensemble d'élévation le rendant mobile verticalement sur pratiquement toute la hauteur des montants d'angle 3 entre une position basse de chargement dans laquelle il arrive en superposition avec la base des montants d'angle et une position haute de transport qui correspond à sa hauteur maximale, imposée par celle du chargement.

Le plateau porteur intermédiaire 32 est autonome dans son fonctionnement et agit à la manière d'un élévateur vertical.

Dans le cas d'une application au transport de véhicules, il présente les mêmes avantages que le plateau ou la plate-forme supérieure des convois articulés porte-véhicules pour les opérations de chargement et de déchargement.

L'ensemble d'élévation du plateau porteur intermédiaire 32 a pour but de le déplacer en translation verticale à la manière d'un élévateur.

En raison du volume intérieur disponible souhaité maximal pour le chargement, l'ensemble d'élévation préféré sera celui présentant le plus faible encombrement.

Un des choix a pu être porté sur un ensemble d'élévation à vis.

Celui-ci met en oeuvre quatre vis telles que 33 entraînant chacune un écrou porteur 34. L'ensemble coulissant est guidé par des patins 35 et 36 et intégré dans chacun des quatre montants d'angle 3 formant l'ossature du conteneur comme le montre la figure 3.

Les vis sont entraînées par couples par un élément moteur, propre à chaque couple, disposé pour l'un à l'avant et pour l'autre à l'arrière du plateau porteur intermédiaire 32. Entre chaque vis d'un même couple, le mouvement est renvoyé par une liaison cinématique de renvoi-jumelage, par exemple à chaîne, permettant par l'indépendance des deux éléments moteurs de rendre le plateau porteur 32 inclinable.

L'écrou porteur 34 de chaque vis 33 est relié de façon pivotante à l'extrémité correspondante du plateau porteur intermédiaire 32, comme on peut le voir sur les figures 3 et 5.

Les vis de l'ensemble d'élévation sont entraînées en rotation électriquement, hydrauliquement ou mécaniquement, soit à partir de deux éléments moteurs, soit à partir d'une seule source motrice moyennant des commandes appropriées assurant l'indépendance des mouvements.

Les vis sont à haut rendement, par exemple à billes. Elles comportent en plus un frein de sécurité.

On examinera maintenant le détail du plateau porteur ou plancher intermédiaire en référence aux figures 6 à 8.

Il convient ici de préciser que le plancher comportera de préférence les mêmes éléments.

Celui-ci est réalisé de façon à présenter l'épaisseur la plus faible possible et à dégager le plus d'espace possible pour la charge à transporter.

Ainsi, il s'agit par exemple d'une succession longitudinale de traverses porteuses en bois telles que des planches 37 reposant entre une structure métallique transversale formée d'une pluralité de zones de jonction latérale présentant des perforations 38.

Ces perforations 38 peuvent servir au passage et à l'appui des crochets d'extrémité des sangles d'arrimage ou cales ou autres moyens d'immobilisation.

Plus particulièrement, chaque structure métallique transversale est constituée d'une succession de profilés métalliques de soutien 39, de préférence en aluminium, conformé chacun selon la forme générale illustrée par les figures 7 et 8.

Ces profilés déterminent deux à deux des alvéoles longitudinales telles que 40 dans chacune desquelles est logée une traverse en bois 37.

Il s'agit d'une forme en tunnel, plus particulièrement à section en "U" renversé présentant deux flancs longitudinaux 41 et 42 terminés chacun par un retour latéral porteur 43 et 44 formant feuillure permettant de constituer, avec le retour homologue en regard de la structure voisine, une surface longitudinale porteuse. Celle-ci, prolongée par les flancs longitudinaux 41 et 42 forme une alvéole utilisée comme volume de réception dans lequel vient s'encastrer à immobilisation chaque planche 37.

Chaque profilé métallique de soutien 39 présente une partie supérieure sous la forme d'une bande perforée selon, par exemple, des ouvertures oblongues 38 destinées, comme indiqué, à l'accrochage de structures d'arrimage ou de calage.

Afin d'éviter la chute des matières (gravillons, terre, boue,...) et le ruissellement des liquides directement vers le bas (fuites d'huile des véhicules transportés ...) susceptibles de traverser les perforations, on prévoit un plan de réception sous la forme d'un tiroir ou d'une lame à clipser 45 entre les flancs latéraux en regard de chaque structure porteuse métallique. Ce plan de réception, facilement amovible, joue le rôle de réceptacle et assure l'étanchéité.

Le plateau porteur intermédiaire 32 est de la plus faible épaisseur possible et sa rigidification est apportée par deux profilés de bordure 46 à saillie dirigée vers le bas qui permettent également de maintenir selon un périmètre de calage la partie supérieure de la charge inférieure.

Des traverses de liaison telles que 47 relient les profilés 46 entre deux.

Ce conteneur est de type universel, c'est-à-dire que ses faces latérales et transversales peuvent être ouvertes ou fermées et équipées de différentes façons : grillage, bâche coulissante, porte simple, porte isotherme, hayon arrière...

Les figures 12 et 13 représentent des exemples d'utilisation dans le domaine des transports routiers.

On remarque tout d'abord un convoi articulé porte-voitures. Bien entendu, il s'agit d'un convoi porte-véhicules dans son sens le plus général (figure 12).

Les deux conteneurs porte-véhicules 48 et 49 sont fixés sur le châssis d'un camion 50 et d'une remorque 51 par tout moyen approprié, notamment par leurs pièces de coin. Les béquilles rabattables permettent de les soutenir lorsque le conteneur est abandonné sur une aire de stockage.

La figure 13 montre l'abandon de la charge, c'est-à-dire des conteneurs fermés 52 et 53, après mise sur béquilles. Le camion 50 et sa remorque 51 peuvent être identiques à ceux précédemment représentés.

## Revendications

1. Conteneur multiusage présentant en combinaison une ossature formée d'un cadre-châssis (5) et de quatre montants d'angle (3) dont les parties inférieures sont fixées sur les coins du cadre-châssis, un toit relevable (18), un plateau porteur intermédiaire (32) de faible épaisseur, mobile verticalement entre une position basse et une position haute par des moyens d'élévation verticaux incorporés aux montants d'angle (3), pour fractionner le volume utile intérieur en un volume utile inférieur et un volume utile supérieur, caractérisé en ce que les parties inférieures des quatre montants d'angle (3) sont fixées par encastrement dans les coins du cadre-châssis (5), en ce que le toit (18) est relevable par des moyens indépendants de mobilité verticale, et en ce que le plateau porteur (32) est inclinable et entraîné par un ensemble d'élévation fonctionnellement indépendant des moyens de mobilité verticale du toit (18), de manière à garder maximal le volume utile supérieur délimité par le plateau porteur intermédiaire (32) et les structures adjacentes de toit (18).

2. Conteneur selon la revendication 1, caractérisé en ce que les montants d'angle (3) encastrés dans les angles du cadre-châssis (5) le sont selon une structure interpénétrante.

3. Conteneur selon la revendication 2, caractérisé en ce que l'interpénétration de l'extrémité basse de chaque montant d'angle (3) dans l'angle du cadre-châssis (5) forme une pièce de coin pourvue d'au moins une ouverture oblongue sur sa face inférieure.

4. Conteneur selon la revendication 1, caractérisé en ce que le plateau porteur intermédiaire mobile (32) est formé de traverses en bois, chacune portée par ses extrémités par un cadre métallique et logée dans une alvéole métallique longitudinale aux traverses, déterminée par deux profilés métalliques de soutien (39) successifs, chaque traverse étant séparée par une zone de jonction latérale constituée par la partie supérieure des profilés de soutien.

5. Conteneur selon la revendication 4, caractérisé en ce que la zone de jonction latérale comporte des perforations (38).

6. Conteneur selon la revendication 1, caractérisé en ce que l'ensemble d'élévation du plateau intermédiaire est à vis (33), entraînant des écrous porteurs (34).

7. Conteneur selon la revendication 6, caractérisé en ce que chaque couple de vis est commandé séparément pour permettre l'inclinaison du plateau.

8. Conteneur selon la revendication 1, caractérisé en ce que le toit est relevable par deux ensembles de levage à ciseaux (22).

9. Conteneur selon la revendication 8, caractérisé en ce que le toit présente des rives longitudinales portant un support de déplacement (30) d'une bâche (31) obturant les faces correspondantes.

## Claims

1. Multi-purpose container which has in association a framework consisting of a chassis frame (5) and four angle uprights (3), the lower parts of which are attached to the corners of the chassis frame, a roof (18) which can be raised, a thin intermediate support platform (32) which can be moved vertically between a low position and a high position by means of vertical lifting means incorporated in the angle uprights (3), in order to divide the inner useful volume into a lower useful volume and an upper useful volume, characterised in that the lower parts of the four angle uprights (3) are attached by being embedded in the corners of the chassis frame (5), the roof (18) can be raised by independent vertical mobility means, and the support platform (32) can be inclined and entrained by a lifting assembly which is functionally independent of the vertical mobility means for the roof (18), such as to keep to the maximum the upper useful volume delimited by the intermediate support platform (32) and the adjacent structures of the roof (18).

2. Container according to claim 1, characterised in that the angle uprights (3) are embedded in the angles of the chassis frame (5) according to an interpenetrating structure.

3. Container according to claim 2, characterised in that the interpenetration of the lower end of each angle upright (3) in the angle of the chassis frame (5) forms a corner piece which is provided with at least one oblong aperture on its inner surface.

4. Container according to claim 1, characterised in the that the mobile intermediate support platform (32) consists of wooden crosspieces, each of which is supported at its ends by a metal frame and is accommodated in a metal alveolus which is longitudinal relative to the crosspieces, consisting of two successive metal support profiles (39), each crosspiece being separated by a lateral joining area consisting of the upper part of the support profiles.

5. Container according to claim 4, characterised in that the lateral joining area includes perforations (38).

6. Container according to claim 1, characterised in that the lifting assembly for the intermediate platform is of the screw type (33), and entrains support nuts (34).

7. Container according to claim 6, characterised in that each pair of screws is controlled separately in order to permit inclination of the platform.

8. Container according to claim 1, characterised in that the roof can be raised by means of two scissor lifting assemblies (22).

9. Container according to claim 8, characterised in that the roof has longitudinal edges which support a displacement support (30) for a tarpaulin (31) which closes the corresponding surfaces.

## Patentansprüche

1. Mehrzweck-Container mit einem von einem Tragrahmen (5) und vier Eckständern (3), deren untere Abschnitte an den Ecken des Tragrahmens festgelegt sind, gebildeten Skelett, einer hebbaren Decke (18) und einer Zwischen-Ladefläche (32) geringer Stärke, die vertikal zwischen einer unteren Stellung und einer oberen Stellung mittels in den Eckständern (3) angeordneter, vertikaler Hubmittel bewegbar ist, um das innere Nutzvolumen in ein unteres Nutzvolumen und ein oberes Nutzvolumen zu teilen, dadurch gekennzeichnet, daß die unteren Abschnitte der vier Eckständer (3) fest in den Ecken des Tragrahmens (5) eingefügt sind, daß die Decke (18) mit von der vertikalen Bewegung unabhängigen Mitteln anhebbar ist, und daß die Ladefläche (32) neigbar und von einer von den Mitteln zum vertikalen Bewegen der Decke (18) funktionell unabhängigen Hubeinheit angetrieben ist, um das durch die Zwischen-Ladefläche (32) und die der Decke (18) benachbarten Strukturen begrenzte obere Nutzvolumen größtmöglich zu halten.

2. Behälter nach Anspruch 1, dadurch gekennzeichnet, daß die in die Ecken des Tragrahmens (5) eingefügten Eckständer eine einander durchdringende Struktur aufweisen.

3. Behälter nach Anspruch 2, dadurch gekennzeichnet, daß die Durchdringung des unteren Endes jedes Eckständers (3) mit der Ecke des Tragrahmens (5) ein Eckstück bildet, das an seiner Unterseite mit zumindest einem Langloch versehen ist.

4. Behälter nach Anspruch 1, dadurch gekennzeichnet, daß die bewegliche Zwischen-Ladefläche (32) durch Querbalken aus Holz gebildet ist, die jeweils an ihren Enden durch einen Metallrahmen getragen sind und in einer längs der Querträger verlaufenden Metallwabe sitzen, die durch zwei einander folgende Halteprofile (39) aus Metall begrenzt ist wobei die Querträger durch eine seitliche Verbindungszone, die durch den oberen Abschnitt der Halteprofile gebildet ist, getrennt sind.

5. Behälter nach Anspruch 4, dadurch gekennzeichnet, daß die seitliche Verbindungszone Perforationen (38) aufweist.

6. Behälter nach Anspruch 1, dadurch gekennzeichnet, daß die Hubeinheit Spindeln (33) aufweist, die Tragmuttern (34) antreiben.

7. Behälter nach Anspruch 6, dadurch gekennzeichnet, daß jedes Spindelpaar zum Neigen der Zwischen-Ladefläche unabhängig steuerbar ist.

8. Behälter nach Anspruch 1, dadurch gekennzeichnet, daß die Decke mittels zweier Scheren-Hubeinheiten (22) anhebbar ist.

9. Behälter nach Anspruch 8, dadurch gekennzeichnet, daß die Decke zwei Längsträger aufweist, die eine Verlagerungseinheit (30) für eine die entsprechenden Seiten verschließende Plane (31) tragen.
